# DEMANDE DE BREVET EUROPEEN

(11) **EP 0 718 087 A1**
(43) Date de publication de la demande: **26.06.1996**
(21) Numéro de dépôt: 95402823.9
(22) Date de dépôt: 15.12.1995
(51) Int. Cl.: B29C 51/22, B32B 31/00, B32B 31/30, B29C 51/14, B65D 81/26

(54) **Procédé de fabrication de barquettes en matériau thermoformable expansé, dispositif mettant en oeuvre le procédé et barquettes ainsi obtenues**

(30) Priorité: 23.12.1994 FR 9415561
(71) Demandeur: POLARCUP FRANCE S.A., F-28702 Auneau Cedex (FR)
(72) Inventeur: Daviller, Jean-Marie, F-28702 Auneau (FR)
(74) Mandataire: Debay, Yves

(57) **Abrégé**

La présente invention concerne un procédé de fabrication de barquettes en matériau thermoformable expansé en sortie de filière (11, 21) par formage sur une roue de formage (4) pourvue d'alvéoles (41) de conformation du matériau expansé en barquette, caractérisé en qu'il comporte les étapes suivantes :
- extrusion simultanée de deux feuilles (1, 2) alimentant en continu la roue de formage (4) en sortie de filières (11, 21), selon deux trajets convergents à l'entrée de la roue de formage (4);
- insertion, dans une zone proche du point de convergence des chemins des deux trajets, de plaquettes (3) en matériau absorbant, de façon synchronisée par rapport au positionnement des alvéoles (41), entre les deux feuilles (1, 2) de matériau thermoformable expansé non refroidies, pour former après passage entre deux rouleaux (92, 91) un sandwich (9)
- formage en continu par aspiration sous vide du sandwich (9) non refroidi sur la roue de formage (4) avec perforation concomitante de trous sur une face des barquettes;
- découpe finale en synchronisme avec la position des alvéoles (41).

## Description

La présente invention concerne un procédé de fabrication de barquette en matériau thermoformable expansé, le dispositif de fabrication mettant en oeuvre le procédé et les barquettes ainsi obtenues.

Il est connu de fabriquer des barquettes en matériau thermoformable expansé, réalisées sous forme d'un sandwich comportant deux feuilles dont une est en matériau expansé, la feuille intermédiaire est en matériau absorbant, et la feuille supérieure constituant le fond de la barquette, soit en matériau plastique thermofusible, soit en matière plastique telle qu'un polystyrène. La plupart des procédés connus impliquent des opérations de reprise, notamment consistant à fabriquer tout d'abord un ou plusieurs rouleaux de matière expansée, pour laisser refroidir et rassir cette matière. Ensuite, les rouleaux sont repris sur une chaîne de fabrication de barquettes dans laquelle les deux rouleaux de matière plastique et un rouleau de matière absorbante sont assemblés pour former un sandwich dont la couche centrale est constituée par la matière absorbante. Des perforations sont prévues sur une face de ce sandwich, puis le sandwich est thermoformé, et découpé pour constituer des barquettes. Un tel procédé présente l'inconvénient de nécessiter un réchauffage des matières plastiques en vue de leur thermoformage et un gaspillage en matière absorbante lorsque le ruban de matériau absorbant occupe toute la longueur de la barquette, y compris la partie non utile comme enseigné par la demande de brevet européen EP-A-0 182 139. De plus, la présence de la couche absorbante a pour conséquence de limiter l'étirement de la matière plastique et la profondeur des barquettes ainsi obtenue, et empêche le recyclage des déchets de détourage du fait de la présence de cette matière absorbante.

Un autre procédé est connu par la demande de brevet française 2 684 330, dans laquelle on part d'un ruban en matériau absorbant que l'on découpe en bandes longitudinales et parallèles, ces bandes étant espacées transversalement, puis découpées transversalement pour former des tampons que l'on colle sur une feuille de base en matière plastique, comme par exemple du polystyrène, puis on imprime sur cette feuille de base des marques d'indexation. On pose ensuite un film de couverture, on perfore le film de couverture et on réalise le thermoformage et le découpage des barquettes selon les marques d'indexation. Le thermoformage est réalisé par un outil animé d'un mouvement alternatif vertical et pourvu d'une série d'empreintes mâles et femelles. L'opération de thermoformage peut être intégrée avec les moyens de perforation du film, mais dans ce cas l'outil animé du mouvement alternatif peut provoquer soit un décollement de la bande par rapport à l'empreinte femelle, soit si la course de l'outil animé du mouvement alternatif est trop limitée une déformation partielle de la bande, et donc une barquette qui n'aura pas toute la profondeur de l'empreinte. De plus, l'outil de perforation devra avoir, soit des éléments de perforation dont la hauteur correspond à l'épaisseur de la pellicule à perforer, ce qui nécessite de faibles hauteurs et rend l'outil particulièrement vulnérable, soit des éléments de perforation plus longs, mais dans ce cas l'élément thermodéformable ne pourra pas être repoussé jusqu'au fond du logement de l'empreinte femelle. Enfin, si l'opération de perforation n'est pas intégrée à l'une des opérations de thermoformage ou de découpe, chaque opération nécessitera de disposer d'un dispositif de lecture des empreintes d'indexation, de façon à positionner correctement les sandwiches avant la perforation, avant le thermoformage et avant la découpe.

Enfin, comme l'outil de thermoformage est constitué d'une série d'empreintes mâles et femelles et animé d'un mouvement alternatif, l'opération de thermoformage provoque au niveau de la feuille supérieure un écrasement, ce qui implique forcément que la barquette,même si elle fabriquée avec une feuille qui sort directement de l'extrudeuse, ne pourra pas avoir une feuille supérieure, expansée d'aspect identique à la feuille inférieure.

Le but de l'invention est donc de proposer un procédé de fabrication en continu qui limite les opérations de réchauffage d'une part, qui ne nécessite pas une indexation de l'un des éléments du sandwich constituant les futures barquettes, et qui par conséquent évite d'avoir sur les différents postes du procédé des moyens de détection de ces marques d'indexation de façon à réduire le coût de l'ensemble du dispositif.

Ce but est atteint par le fait que le procédé de fabrication de barquettes en matériau thermoformable expansé en sortie de filière par formage sur une roue de formage pourvue d'alvéoles de conformation du matériau expansé en barquette est caractérisé en ce qu'il comporte les étapes suivantes :
- extrusion simultanée de deux feuilles alimentant en continu la roue de formage en sortie de filière, selon deux trajets convergents à l'entrée de la roue de formage ;
- insertion, de façon synchronisée par rapport au positionnement des alvéoles, de plaquettes en matériau absorbant entre les deux feuilles en matériau thermoformable expansé non refroidies dans une zone proche du point de convergence des trajets pour former, après passage entre deux rouleaux, un sandwich ;
- formage en continu par aspiration sous vide du sandwich sur la roue de formage avec perforation concomitante de trous sur une face des barquettes ;
- découpe finale par un outil entraîné en synchronisme par rapport à la position des alvéoles de la roue de formage.

Un autre but de l'invention est de proposer un dispositif de fabrication en continu ne nécessitant pas d'opérations de reprise et permettant d'avoir une installation peu coûteuse.

Ce but est atteint par le fait que le dispositif de fabrication de barquettes en matériau thermoformable expansé en sortie de filière par formage sur une roue de formage pourvue d'alvéoles de conformation du matériau expansé en barquette est caractérisé en ce qu'il comporte deux filières associées à une ou plusieurs extrudeuses pour fournir en continu les deux feuilles non refroidies alimentant simultanément selon deux trajets convergents la roue de formage à chaud des barquettes, un dispositif de découpe de plaquettes en matériau absorbant et d'insertion de ces plaquettes de matériau absorbant disposé selon un troisième trajet situé entre les deux premiers, le dispositif d'insertion assurant l'insertion de façon synchronisée par rapport au positionnement des alvéoles de la roue de formage et à proximité du point de convergence des premier et second trajets ;
- au moins un rouleau situé au point de convergence des trois trajets assurant la constitution du sandwich ;
- une roue de formage entraînée en synchronisme de rotation avec un cylindre pourvu selon un pas correspondant aux alvéoles de la roue d'éléments perforants ;
- et un dispositif de synchronisation.

Selon une autre particularité, le cylindre de perforation étant placé à proximité de la zone où la bande-sandwich est conformée en une succession de barquettes quitte la roue de formage ;
- et la distance entre le cylindre de perforation et la roue de formage est calculée en fonction de la hauteur des éléments perforants pour que ceux-ci ne perforent que la première couche du sandwich.

Selon une autre particularité, le dispositif comporte un dispositif de découpe des plaquettes absorbantes formé d'un outil coupant rotatif alimenté par une bobine (32) dévidant un ruban en matériau absorbant.

Selon une autre particularité, le dispositif comporte un dispositif d'insertion des plaquettes constitué de deux tapis transporteurs entre lesquels la plaquette est entraînée, les dits tapis transporteurs étant entraînés en synchronisme avec la rotation de la roue de formage.

Selon une autre particularité, le dispositif de synchronisation est mécanique.

Selon une autre particularité, le dispositif de synchronisation est électronique.

Enfin, un dernier but de l'invention est de proposer une barquette dont les deux parois puissent être en polystyrène expansé.

Ce but est atteint par le fait que la barquette est constituée d'un sandwich formé avec un matériau absorbant entouré sur sa face supérieure et inférieure d'une matière thermoplastique expansé et caractérisé en ce que la paroi du fond de la barquette est pourvue de perforations, sans que l'épaisseur de la feuille de matière thermoplastique constituant cette paroi ne subisse de diminutions.

D'autres caractéristiques et avantages de la présente invention apparaîtront plus clairement à la lecture de la description ci-après faite en référence aux dessins annexés dans lesquels :
- la figure 1 représente une vue schématique du dispositif de fabrication permettant la mise en oeuvre du procédé ;
- la figure 2 représente une vue en coupe de la barquette obtenue selon l'invention.
- la figure 3 représente une vue de dessus de la barquette.

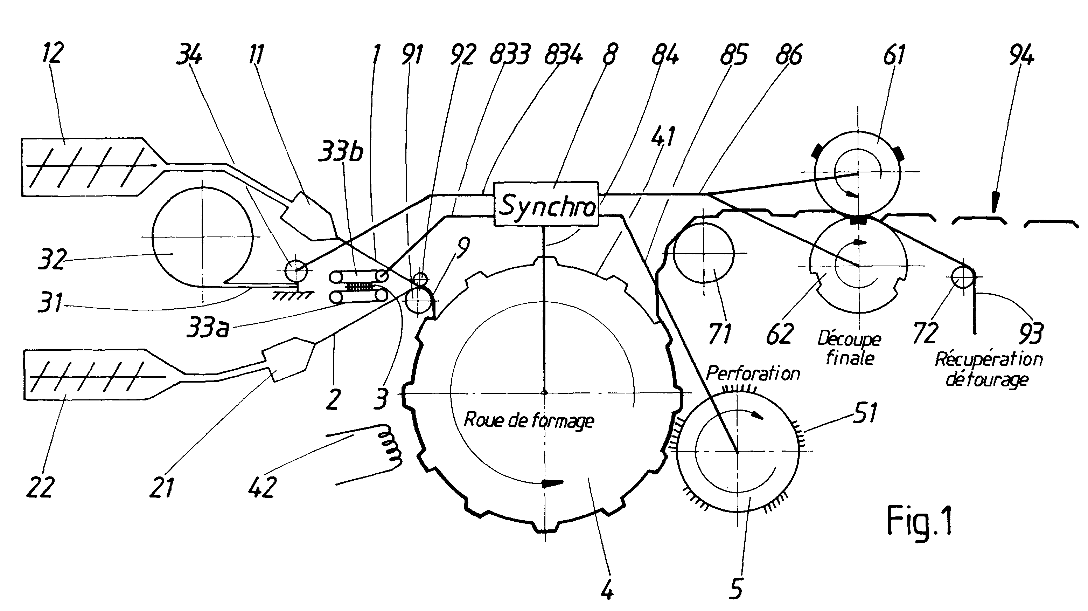

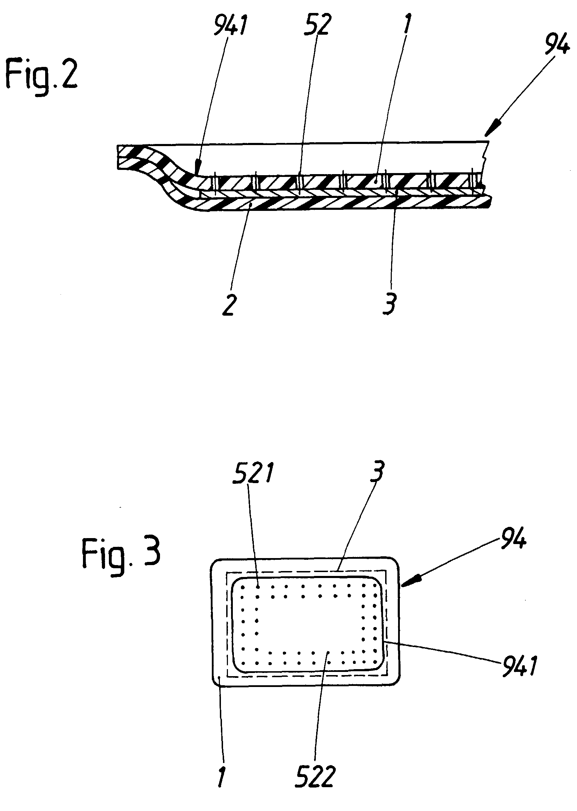

Le dispositif permettant la mise en oeuvre du procédé va maintenant être décrit à l'aide de la figure 1. A partir de matières premières extrudables, telles que, par exemple, du polystyrène, il est procédé à l'extrusion simultanée de deux feuilles comportant au moins un matériau expansé, de largeurs et d'épaisseurs définies par les caractéristiques des outillages d'extrusion. Chacune des feuilles (1, 2) est produite en sortie d'une filière respective (11, 21), alimentée dans l'exemple de la figure 1, chacune par une extrudeuse séparée (12, 22). L'équipement peut également comporter une filière double à la place des deux filières et les filières, qu'elles soient doubles ou simples, peuvent être associées à une ou plusieurs extrudeuses. De même dans une variante de l'invention, les feuilles (1, 2) destinée à former la barquette (94), peuvent être multicouches et comporter, sur la face destinée à être orientée à l'extérieur de la barquette, une couche de couleur sur la couche de polystyrène expansé. Les feuilles ainsi produites et orientées de façon à avoir les faces en polystyrène expansé en vis-à-vis cheminent selon deux trajets différents et convergents vers un point commun constitué d'au moins un rouleau (91, 92) entre lesquels viennent passer les deux feuilles (1, 2). Préalablement au passage des feuilles entre le ou les deux rouleaux (91, 92), une plaquette (3) de matériau absorbant, de dimension inférieure à la dimension des feuilles et à la dimension des barquettes (94), comme représenté à la figure 3, est insérée entre les deux feuilles par un dispositif permettant une insertion des plaquettes en synchronisme avec les opérations que l'on verra ultérieurement. Ceci permet de constituer un sandwich (9) à une température permettant encore la transformation plastique en barquette. Les sandwiches (9) ainsi constitués sont enroulés en continu sur une roue de formage. Cette roue de formage (4) est constituée par une succession d'alvéoles (41) conformées selon la forme souhaitée pour les barquettes, et dont le fond est perforé. Le fond perforé de chaque alvéole (41) est relié à un système d'aspiration, qui permet de plaquer et d'attirer vers ce fond le sandwich de façon à le déformer et faire prendre au sandwich la forme de l'alvéole. A cette roue de formage sont associées sur la partie de la roue servant au formage du sandwich deux bandes de pression qui permettent de plaquer les bords du ruban du sandwich contre les bords extérieurs de la roue de formage, de façon à améliorer l'aspiration tout en assurant un maintien de la bande thermoformée. Dans la zone de formage un élément de chauffage (42) assurant un réchauffage superficiel minimum de la surface du sandwich pour permettre d'éviter des phénomènes de craquelure lors du formage. De façon facultative et en fonction des formes à réaliser, un dispositif mécanique et/ou pneumatique d'aide au formage peut être rajouté.

A proximité de la zone où le ruban de sandwich (9) conformé en barquette quitte la roue de formage est placé un cylindre de perforation (5) pourvu d'éléments perforants (51) régulés en température entre 150 et 230 degrés C sur des portions de sa périphérie. L'espacement entre les groupes d'éléments perforants (51) prévus à la périphérie du cylindre (5) correspond au pas séparant les alvéoles successives sur la roue de formage (4). Le cylindre (5) est entraîné en synchronisme avec la roue de formage (4) comme représenté par la liaison (84) avec l'élément de synchronisation (8) et la liaison (85). La réalisation de l'élément de synchronisation (8) peut être soit mécanique, soit électronique selon la technologie adoptée.

La hauteur des éléments perforants (51) est fonction de la distance réglable séparant le centre de rotation du cylindre (5) du fond des alvéoles (4). Après réglage, ces éléments perforants (51) ne perforent que la feuille supérieure (1) de la barquette (9), laissant ainsi la matière absorbante (3) intacte. Par ailleurs, la perforation en sortie de formage permet d'éviter les déformations des perforations par rapport au procédé où la perforation est faite avant le thermoformage. Ceci présente l'avantage d'obtenir des barquettes (94) dont les propriétés d'absorption des exsudats sont constantes, et ne risquent pas d'évoluer en fonction des déformations obtenues. On peut ainsi dimensionner le trou de façon précise pour absorber et ne pas rejeter les exsudats. Le nombre, la forme (par exemple en entonnoir) et la dimension des éléments de perforation réalisant les trous sont fonction de la nature de l'exsudat à absorber. Dans une variante de l'invention, les perforations seront réalisées selon un tracé suivant la périphérie du fond de la barquette (94). Ce tracé peut être constitué de deux rangées (521, 522) de perforations (52) disposées en quinconce, comme représenté à la figure 3. Cette disposition permet de limiter les perforations à la zone utile qui est adjacente à la périphérie (94) du fond, zone dans laquelle les exsudats s'accumulent lors de la présentation des produits. La bande continue (9) formée d'une succession de barquettes passe ensuite sur un rouleau (71) pour être amenée à une station de découpage constituée de deux cylindres (61, 62), dont l'un (62) porte l'outil de découpe et l'autre (61) est un cylindre presseur. Les outils de découpe sont espacés à la périphérie du cylindre (62) selon un pas qui correspond à l'intervalle séparant les barquettes. Les barquettes découpées (94) sont évacuées par un tapis transporteur, tandis que le détourage (93) résultant des parties non découpées est envoyé vers le recyclage. De la même façon, les outils de découpe (61, 62) sont synchronisés par rapport à la roue de formage (4) de façon à ce que chaque couteau de découpe vienne se placer dans les bossages séparant deux barquettes (94).

La synchronisation du dispositif peut être facilement réalisée mécaniquement par des ensembles de courroies de transmission et de pignons de démultiplication constituant ainsi le dispositif de synchronisation (8). La synchronisation de l'outil de coupe (34) constituant les plaquettes (3) à partir d'une bobine (32) délivrant un ruban de matériau absorbant (31) est facilement réalisée mécaniquement, en ajoutant aux courroies et engrenages de démultiplication un dispositif déphaseur pour que l'insertion des plaquettes découpées se fasse exactement au bon moment, et de sorte que le sandwich ainsi réalisé de façon intermittente se positionne dans le creux d'une alvéole. De même, les deux courroies transporteuses (33a, 33b) seront pourvues d'un même dispositif de synchronisation avec déphaseur, de façon à régler exactement le moment d'introduction de chaque nouvelle plaquette (3) par rapport à la position des alvéoles (4) sur la route de formage. Le dispositif ainsi obtenu permet de réaliser le procédé de l'invention, qui assure la fabrication en continu, avec un minimum de réchauffage de barquettes produites à l'aide d'un sandwich (9) de matériaux, dont les feuilles supérieures sont des matériaux plastiques expansés. Enfin, ce procédé permet d'obtenir des barquettes dont les deux feuilles supérieures (1) et inférieures (2) sont de même épaisseur et peuvent être expansées de la même façon.

Ceci n'est pas le cas dans le cadre des autres procédés qui nécessitent des opérations de reprise des feuilles de matière expansée, consommant ainsi de l'énergie inutile pour un réchauffage total en vue du thermoformage, et produisent une des feuilles en sortie de filière mais déformant la feuille supérieure au cours de l'opération de thermoformage en diminuant son épaisseur.

Il est bien évident que la description ci-dessus faite dans le cadre de l'utilisation de polystyrène expansé est également valable dans le cas de l'utilisation de polyoléfine (polyéthylène, polypropylène) ou d'une combinaison de plastiques thermo-formables dont au moins une partie est expansée.

## Revendications

1. Procédé de fabrication de barquettes en matériau thermoformable expansé en sortie de filière (11, 21) par formage sur une roue de formage (4) pourvue d'alvéoles (41) de conformation du matériau expansé en barquette, caractérisé en qu'il comporte les étapes suivantes :
- extrusion simultanée de deux feuilles (1, 2) alimentant en continu la roue de formage (4) en sortie de filières (11, 21), selon deux trajets convergents à l'entrée de la roue de formage (4);
- insertion, dans une zone proche du point de convergence des chemins des deux trajets, de plaquettes (3) en matériau absorbant, de façon synchronisée par rapport au positionnement des alvéoles (41), entre les deux feuilles (1, 2) de matériau thermoformable expansé non refroidies, pour former après passage entre deux rouleaux (92, 91) un sandwich (9) ;
- formage en continu par aspiration sous vide du sandwich (9) non refroidi sur la roue de formage (4) avec perforation concomitante de trous sur une face des barquettes;
- découpe finale en synchronisme avec la position des alvéoles (41).

2. Dispositif de fabrication de barquettes mettant en oeuvre le procédé suivant la revendication 1, caractérisé en ce qu'il comporte deux filières (11, 21) associées à une ou plusieurs extrudeuses (12, 22) pour former en continu deux feuilles (1, 2) non refroidies, alimentant simultanément selon deux trajets convergents une roue de formage (4) à chaud des barquettes ;
- un dispositif (34) de découpe de plaquettes en matériau absorbant (3) et d'insertion (33a, 33b) de ces plaquettes (3) de matériau absorbant disposé selon un troisième trajet situé entre les deux premiers et assurant l'insertion de façon synchronisée par rapport au positionnement des alvéoles (41) de la roue de formage (9) et à proximité du point de convergence des premier et second trajets ;
- au moins un rouleau (91, 92) situé au point de convergence des trois trajets assurant la constitution d'une bande continue de sandwich sucessifs ;
- un cylindre (5) pourvu d'éléments perforants (51) disposés selon un pas correspondant aux alvéoles (41) de la roue (4) de formage entraîné en synchronisme de rotation avec cette roue (4) ;
- un dispositif (8) de synchronisation des différents éléments.

3. Dispositif de fabrication selon la revendication 2, caractérisé en ce que le cylindre (5) de perforation est placé à proximité de la zone où la bande-sandwich conformée en une succession de barquettes quitte la roue de formage (4), et la distance entre le cylindre de perforation (5) et la roue de formage (4) est calculée en fonction de la hauteur des éléments perforants pour que ceux-ci ne perforent que la première couche (1) du sandwich (9).

4. Dispositif selon la revendication 2 ou 3, caractérisé en ce que le dispositif de découpe des plaquettes absorbantes est constitué d'un outil coupant rotatif (34) alimenté par une bobine (32) dévidant un ruban en matériau absorbant (31).

5. Dispositif selon une des revendications 2 à 4, caractérisé en ce que le dispositif d'insertion (33a, 33b) est constitué de deux tapis d'entraînement dont la vitesse d'entraînement est synchronisée par des moyens (833, 8, 84) par rapport à la rotation de la roue de formage (4).

6. Dispositif selon une des revendications2 à 5, caractérisé en ce que le dispositif de synchronisation est mécanique.

7. Dispositif selon une des revendications 2 à 5, caractérisé en ce que le dispositif de synchronisation est électronique.

8. Dispositif selon une des revendications 2 à 7, caractérisé en ce qu'il comporte dans la zone de formage un élément de chauffage assurant un réchauffage superficiel.

9. Dispositif selon une des revendications 2 à 8, caractérisé en ce que les éléments perforants sont régulés en température entre 150 et 230 degrés C.

10. Barquette obtenue selon le procédé de la revendication 1, constituée d'un sandwich (9) formé avec un matériau absorbant entouré sur sa face supérieure et inférieure d'une matière thermoplastique, caractérisée en ce que les deux feuilles supérieures et inférieures sont en matière thermoplastique expansée et l'épaisseur de la paroi perforée de fond de la barquette est identique en tous points de cette paroi.
